# EUROPÄISCHE PATENTSCHRIFT

(11) **EP 1 518 720 B1**
(45) Veröffentlichungstag und Bekanntmachung des Hinweises auf die Patenterteilung: **13.11.2013**
(21) Anmeldenummer: 03103549.6
(22) Anmeldetag: 25.09.2003
(51) Int. Cl.: B60G 3/20, B60G 9/02, B60G 21/00

(54) **Radachse für ein Kraftfahrzeug**
Wheel axle for a motor vehicle
Essieu de roue pour véhicule à moteur

(43) Veröffentlichungstag der Anmeldung: 30.03.2005
(73) Patentinhaber: Ford Global Technologies, LLC, A subsidary of Ford Motor Company, Dearborn, MI 48126 (US)
(72) Erfinder: Ohra-aho, Lauri Mikael, 52074 Aachen (DE); Graaf, Roger, 6271 EK Gulpen (NL); Simon, Marc, 50765 Köln (DE)
(74) Vertreter: Drömer, Hans-Carsten

(56) Entgegenhaltungen:
- EP-A- 0 034 531
- WO-A-02/058949
- GB-A- 2 270 508

## Beschreibung

Die Erfindung betrifft eine Radachse für ein Kraftfahrzeug gemäß dem Oberbegriff des Anspruchs 1.

Für Radachsen von Kraftfahrzeugen sind verschiedene Ausführungsformen bekannt, die sich hinsichtlich ihres konstruktiven Aufwandes sowie der resultierenden Fahrdynamik unterscheiden. Eine wichtige Kenngröße hinsichtlich des Fahrverhaltens ist dabei der sogenannte Radsturz, das heißt der Winkel, den die Ebene eines Rades relativ zur Senkrechten am Aufstandspunkt des Rades annimmt. Ist die Radebene oben vom Fahrzeug weg nach außen geneigt, so spricht man von einem "positiven Sturz", andernfalls von einem "negativen Sturz".

Um das Potential der Räder zur Aufnahme von Seitenkräften und zur Kraftübertragung zu maximieren und um den Radverschleiß zu minimieren, wäre es an sich wünschenswert, die Neigung des Rades in Bezug zur Straße (Radsturz) auf einem nahezu konstanten Wert zu halten. Das heißt, daß bei einer parallelen Radbewegung oder der Bewegung eines einzelnen Rades sich die Neigung des Rades relativ zum Fahrzeug und damit zur Fahrbahn so wenig wie möglich verändern sollte. Andererseits sollte bei einer Rollbewegung (Drehung der Karosserie um ihre Längsachse) während einer Kurvenfahrt eine möglichst große negative Änderung des Radsturzes des kurvenäußeren Rades und eine möglichst große positive Änderung des Radsturzes des kurveninneren Rades relativ zu Karosserie vorhanden sein, um die Rollbewegung der Karosserie zu kompensieren und das Potential zur Aufnahme von Seitenkräften zu maximieren.

Bei einer herkömmlichen Radachse der eingangs genannten Art kann keines der vorstehend genannten Ziele bestmöglich erreicht werden. Die Kinematik der Radaufhängung muß vielmehr als Kompromiß zwischen den sich widersprechenden Anforderungen ausgelegt werden. Starre Radachsen haben demgegenüber zwar inhärent die Möglichkeit, unter allen Bedingungen die Neigung des Rades relativ zur Straße beizubehalten; sie weisen dafür jedoch andere Nachteile auf wie beispielsweise einen großen Platzbedarf zur Gewährleistung der Radbewegung, eine große ungefederte Masse sowie Probleme mit einer rotierenden Vibration der Achse um die Längsachse des Fahrzeuges.

Darüber hinaus sind in der Vergangenheit verschiedene Konzepte entwickelt worden, um eine Änderung des Radsturzes während eines Rollens der Karosserie zu kompensieren und gleichzeitig einen konstanten Radsturz bei paralleler Radbewegung zu gewährleisten. So sind beispielsweise aktive (hydraulische oder elektrische) Systeme zur Einstellung des Radsturzwinkels vorgeschlagen worden, die jedoch hinsichtlich der damit verbundenen Kosten sowie der Zuverlässigkeit problematisch sind. Des Weiteren wird in der US 2002/0125674 A1 eine Konstruktionen vorgeschlagen, bei der zusätzliche Verbindungselemente zwischen den oberen Querlenkern der beiden Räder einer Achse vorgesehen werden. Nachteilig bei dieser und vergleichbaren Lösungen ist, daß die zusätzlichen Komponenten die Komplexität der Radachse steigern und daher neben einem erhöhten Platzbedarf auch zusätzliche Kosten verursachen.

Dasselbe gilt für eine aus der WO 02/058949 A1 bekannte Radachse für ein Kraftfahrzeug, die einen Zwischenrahmen, welcher über schwenkfähige, aber steife Schwingarme mit der Karosserie des Kraftfahrzeuges verbunden ist, und für jedes Rad eine Einzelradaufhängung bestehend aus einem unteren Querlenker und einen oberen Querlenker, die jeweils gelenkig mit einem Radträger und dem Zwischenrahmen gekoppelt sind, enthält.

Die EP 0 034 531 A1 offenbart eine Radachse mit den Merkmalen des Oberbegriffs des Anspruchs 1. Die Radachse enthält auf jeder Seite zwei Lagerbuchsen, die jeweils im montierten Zustand unter einem Neigungswinkel von 0° bzw. 90° zur Fahrzeugquerachse eine geringere Steifigkeit aufweisen als in allen anderen Richtungen senkrecht zur Fahrzeugquerachse.

Vor diesem Hintergrund war es Aufgabe der vorliegenden Erfindung, eine Radachse der eingangs genannten Art bereitzustellen, mit der in einfacher, kostengünstiger Weise eine Verbesserung der Fahrdynamik erzielt wird.

Diese Aufgabe wird durch eine Radachse mit den Merkmalen des Anspruchs 1 gelöst. Vorteilhafte Ausgestaltungen sind in den Unteransprüchen enthalten.

Die erfindungsgemäße Radachse für ein Kraftfahrzeug umfaßt einen Zwischenrahmen oder Fahrschemel, welcher Lagerbuchsen zur gepufferten Verbindung mit der Karosserie eines Fahrzeuges aufweist. Typischerweise hat der Zwischenrahmen dabei mindestens zwei spiegelsymmetrisch zur Fahrzeuglängsebene angeordnete Lagerbuchsen. Der Zwischenrahmen dient als Kopplungsglied zwischen der Karosserie und zwei Einzelradaufhängungen für die beiden Räder der Radachse. Die genannten Einzelradaufhängungen bestehen dabei jeweils aus einem oberen Querlenker und einem unteren Querlenker, wobei die genannten Querlenker jeweils an ihren beiden Enden gelenkig einerseits mit einem Radträger (Achsschenkel etc.) und andererseits mit dem genannten Zwischenrahmen verbunden sind. Unabhängig von der Funktion, die in dieser Erfindung beschrieben wird, kann eine SLA- oder ähnliche Radaufhängung ggf. zusätzliche Quer- oder Längslenker aufweisen. Solche Lenker werden eingesetzt, um z. B. die Längsbewegung oder Spuränderung beim Ein- oder Ausfedern zu kontrollieren. Die Querlenker sind in einem solchen Fall vorzugsweise am Zwischenrahmen angelenkt. Die Längslenker können entweder am Zwischenrahmen oder direkt an der Karosserie angelenkt werden. Die Radachse ist dadurch gekennzeichnet, daß die Lagerbuchsen unter einem Neigungswinkel von 5° bis 45° zur Fahrzeugquerachse eine geringere Steifigkeit aufweisen als in allen anderen Richtungen, wenn die Radachse an eine Karosserie montiert ist. Wenn daher Kräfte zwischen dem Zwischenrahmen und der Karosserie auftreten, geben die Lagerbuchsen einer Kompression in Richtung des genannten Neigungswinkels stärker nach als in Richtungen senkrecht hierzu, was zu einer von der Kraftrichtung abhängigen geometrischen Lageveränderung zwischen der Karosserie und dem Zwischenrahmen führt.

Vorzugsweise ist der untere Querlenker länger als der obere Querlenker ausgebildet, so daß die Einzelradaufhängungen eine Trapezform aufweisen (engl. SLA: Short-Long Arm Suspension). Eine solche SLA Konfiguration hat eine stabilisierende Vergrößerung des negativen Radsturzes beim Einfedern eines Rades zur Folge.

Durch die richtungsabhängige Steifigkeit der Lagerbuchsen kann die Kinematik der Radachse gezielt auf ein gewünschtes Verhalten eingestellt werden. Der herkömmlich aufgebaute Teil der Radachse mit den oberen und unteren Querlenkern unterstützt dabei in üblicher Weise Seitenkräfte und die Radbewegung. Dabei werden Kurvenkräfte vornehmlich durch den unteren Querlenker übernommen, während der obere Querlenker hauptsächlich den Radsturz bestimmt. Während einer parallelen Radbewegung verhält sich die vorgeschlagene Radachse im Wesentlichen wie eine herkömmliche Radachse vom SLA-Typ. Während einer Kurvenfahrt werden die Seitenkräfte vom Zwischenrahmen über die Lagerbuchsen zur Karosserie übertragen. Aufgrund ihrer richtungsabhängigen Steifigkeit bilden die Lagerbuchsen dabei eine Führung, welche den Zwischenrahmen unter Einfluß von Seitenkräften zur Änderung seiner Neigung zwingt, was wiederum an den Rädern einen den Radsturz kompensierenden Effekt hat.

Je nach den gegebenen Parametern des Fahrzeugs sowie der gewünschten Fahrdynamik können der Neigungswinkel, unter welchem die Steifigkeit der Lagerbuchsen minimal ist, und das Verhältnis zwischen minimaler Steifigkeit und der Steifigkeit in Richtungen senkrecht zum Neigungswinkel eingestellt werden.

Die richtungsabhängige Steifigkeit der Lagerbuchsen kann insbesondere so vorgegeben werden, daß eine Veränderung des Radsturzes in Folge Rollen der Karosserie während einer gegenläufigen Radbewegung kompensiert wird. Im Vergleich zu einer herkömmlichen Radachse vom SLA-Typ wird somit eine Kompensation des Radsturzes erreicht, welche wiederum die Straßenhaftung verbessert. Dadurch kann die Kinematik der SLA-Achse so ausgelegt werden, daß bei paralleler Radbewegung keine Sturzänderung auftritt. Von Vorteil gegenüber anderen Lösungen ist diesbezüglich, daß keine zusätzlichen Komponenten nötig sind und damit auch kein zusätzlicher Platzbedarf sowie keine weiteren Kosten entstehen.

Für die beschriebene Radachse können Lagerbuchsen verwendet werden, die in einer "axialen" Richtung der primären Belastung eine kleinere Steifigkeit als in anderen Richtungen aufweisen, wobei die Lagerbuchsen dann mit der Achse minimaler Steifigkeit unter einem entsprechenden Neigungswinkel zwischen Karosserie und Zwischenrahmen anzuordnen sind.

Die Erfindung umfaßt jedoch auch spezielle Lagerbuchsen für eine Radachse der oben beschriebenen Art, welche dadurch gekennzeichnet sind, daß sie Hohlräume und/oder eingebettete Fremdmassen enthalten, um eine richtungsabhängige Steifigkeit zu erzielen. Derartige Lagerbuchsen können dann an quasi beliebiger Stelle zwischen der Karosserie und einem Zwischenrahmen angeordnet werden, da durch ihren inneren Aufbau eine geneigte Lage der Achse minimaler Steifigkeit erreicht wird. Insbesondere können derartige Lagerbuchsen anstelle der bei einer herkömmlichen Radaufhängung verwendeten Lagerbuchsen eingesetzt werden, bei denen die Kraftachse bzw. Verbindungslinie zwischen den Kontaktflächen an Karosserie einerseits und Zwischenrahmen andererseits typischerweise etwa parallel zur Fahrzeughochachse verläuft. Der innere Aufbau der erfindungsgemäßen Lagerbuchsen bewirkt trotz dieser Anordnung dann eine relativ zur Senkrechten schräge Lage der Achse minimaler Steifigkeit.

Abgesehen von eventuellen Fremdmassen besteht eine Lagerbuchse der vorstehend genannten Art typischerweise im Wesentlichen aus Gummi.

Im Folgenden wird die Erfindung mit Hilfe der Figuren beispielhaft näher erläutert.
Es zeigen:
- Fig. 1: eine schematische Ansicht einer erfindungsgemäßen Radachse im Zustand einer Geradeausfahrt;
- Fig. 2: die Radachse von Figur 1 im Zustand einer Kurvenfahrt, und
- Fig. 3-5: verschiedene Arten von Lagerbuchsen mit richtungsabhängiger Steifigkeit.

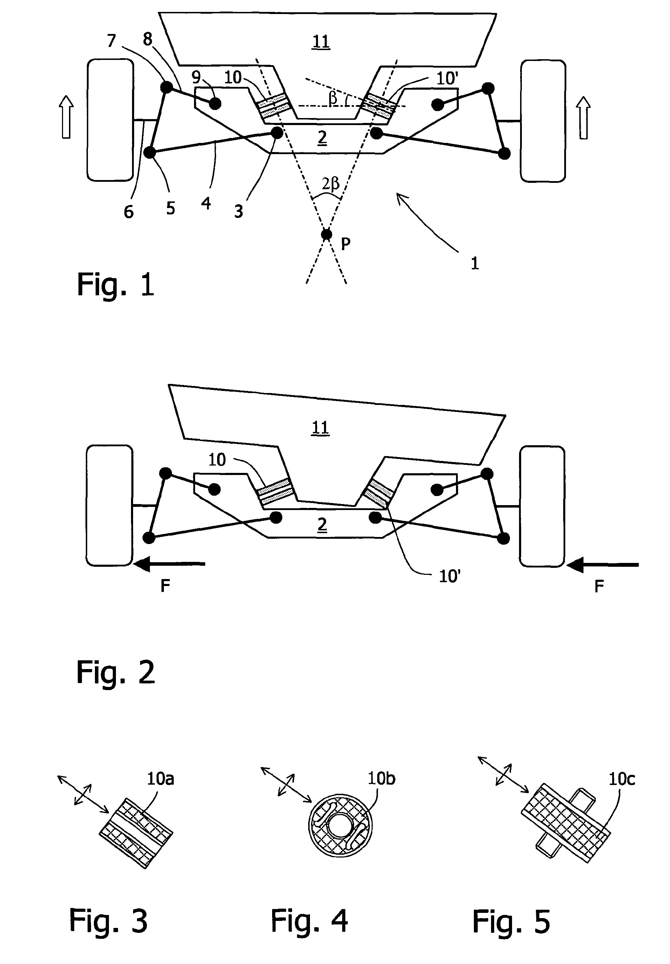

In den Figuren 1 und 2 ist eine erfindungsgemäße Radachse für ein Kraftfahrzeug schematisch in einer Ansicht von hinten wiedergegeben. Der grundsätzliche Aufbau der Radachse entspricht dabei einer Radaufhängung vom SLA-Typ (Short-Long Arm Suspension). Dabei ist der in der Figur linke Radträger 6 eines Rades, bei dem es sich zum Beispiel um einen Achsschenkel handeln kann, in einem Gelenk 7 mit einem oberen kurzen Querlenker 8 verbunden, wobei der Querlenker in einem weiteren Gelenk 9 an einem Zwischenrahmen 2 angelenkt ist. Weiterhin ist der Radträger 6 über ein Gelenk 5 mit einem längeren unteren Querlenker 4 verbunden, wobei das andere Ende des unteren Querlenkers 4 in einem Gelenk 3 an dem Zwischenrahmen 2 angelenkt ist. Die Aufhängung des in der Figur rechten Rades erfolgt in gleicher Weise spiegelsymmetrisch zur beschriebenen Radaufhängung.

Der Zwischenrahmen 2 ist über zwei Lagerbuchsen 10, 10' an der schematisch angedeuteten Karosserie 11 des Kraftfahrzeuges abgestützt. Im Unterschied zum Stand der Technik erfolgt diese Abstützung dabei so, daß die Steifigkeit der Lagerbuchsen 10, 10' unter einem Neigungswinkel β relativ zur Horizontalen (beziehungsweise genauer gesagt zur Querachse des Fahrzeuges beziehungsweise der Radachse) minimal ist; in Richtungen senkrecht zu diesem Neigungswinkel ist die Steifigkeit entsprechend größer. Typischerweise beträgt das Verhältnis zwischen minimaler und maximaler Steifigkeit der Lagerbuchsen 10, 10' etwa 1:1,5 bis 1:10, wobei die Steifigkeit z.B. durch das Verhältnis von wirkender Kraft (Newton) zu resultierender Längenveränderung (mm) ausgedrückt werden kann.

Im dargestellten Beispiel sind Lagerbuchsen 10, 10' mit minimaler Steifigkeit in axialer Richtung unter einem Winkel β zur Horizontalen angeordnet. Die Radien dieser Lagerbuchsen 10, 10' schneiden sich daher in der Zeichenebene in einem Punkt P unter dem Winkel 2β.

Bei einer Geradeausfahrt des Kraftfahrzeuges werden die Lagerbuchsen 10, 10' im Wesentlichen immer symmetrisch belastet, d.h. die beiden Räder bzw. Radträger bewegen sich parallel nach oben (Blockpfeile in Figur 1) oder unten, oder es bewegt sich nur ein Rad allein. Der Zwischenrahmen 2 bleibt hierdurch horizontal ausgerichtet und beeinflußt den Radsturz, d.h. die Neigung der Räder relativ zur Senkrechten, nicht.

Bei der in Figur 2 dargestellten Kurvenfahrt wirken dagegen Seitenkräfte F auf die Räder, die auf den Zwischenrahmen 2 und von diesem auf die Karosserie 11 übertragen werden. Dies führt üblicherweise zu einem Rollen des Zwischenrahmens 2 und der Karosserie 11, d.h. zu einer Drehung um die Längsachse des Fahrzeuges (Senkrechte zur Papierebene). Das Rollen des Zwischenrahmens 2 wirkt sich wiederum kinematisch in nachteiliger Weise auf den Radsturz aus. Eine solche nachteilige Wirkung wird erfindungsgemäß durch eine richtungsabhängige Steifigkeit der Lagerbuchsen 10, 10' kompensiert. Die Steifigkeit der Lagerbuchsen ist nämlich wie erläutert in Richtung des Winkels β relativ zur Fahrzeugquerachse verringert, so daß sich der Zwischenrahmen 2 gegenüber der Karosserie 11 entsprechend zurückdrehen und (ungefähr) die in Figur 2 gezeigt "normale Lage" annehmen kann. Die Veränderung des Radsturzes durch das Rollen des Zwischenrahmens 2 wird auf diese Weise minimiert.

In Figur 3 ist ein Querschnitt durch eine erste Ausführungsform einer Lagerbuchse 10a mit richtungsabhängigem Steifigkeitsverhalten dargestellt. Die Lagerbuchse 10a besteht dabei aus einem Gummizylinder mit einem Hohlraum entlang der Zylinderachse. Die Steifigkeit in zwei zueinander senkrechten Richtungen ist hier und in den folgenden Figuren jeweils durch unterschiedlich lange Pfeile symbolisiert.

Bei der in Figur 4 gezeigten Ausführungsform einer äußerlich zylinderförmigen Lagerbuchse 10b sind im Inneren Hohlräume zur Erzeugung einer anisotropen Steifigkeit vorgesehen.

Die in Figur 5 gezeigte Lagerbuchse 10c besteht aus einem massiven, quaderförmigen Gummikörper, welcher an zwei gegenüberliegenden Außenflächen durch formstabile Platten gefaßt ist.

## Patentansprüche

1. Radachse für ein Kraftfahrzeug, enthaltend
a) einen Zwischenrahmen (2), welcher Lagerbuchsen (10, 10') zur Verbindung mit der Karosserie (11) des Kraftfahrzeuges aufweist;
b) für jedes Rad eine Einzelradaufhängung bestehend aus einem unteren Querlenker (8) und einem oberen Querlenker (4), wobei die Querlenker (4, 8) jeweils gelenkig mit einem Radträger (6) und dem Zwischenrahmen (2) gekoppelt sind;
**dadurch gekennzeichnet, daß**
die Lagerbuchsen (10, 10') im montierten Zustand unter einem Neigungswinkel (β) von 5° bis 45° zur Fahrzeugquerachse eine geringere Steifigkeit aufweisen als in allen anderen Richtungen.

2. Radachse nach Anspruch 1,
**dadurch gekennzeichnet, daß**
der untere Querlenker (4) länger ist als der obere Querlenker (8).

3. Radachse nach Anspruch 1 oder 2,
**dadurch gekennzeichnet, daß**
die Steifigkeit der Lagerbuchsen (10, 10') derart eingestellt wird, daß eine Veränderung des Radsturzes während einer parallelen Radbewegung minimiert und ein Rollen der Karosserie während einer gegenläufigen Radbewegung kompensiert wird.

4. Radachse nach mindestens einem der Ansprüche 1 bis 3,
**dadurch gekennzeichnet, daß**
der Zwischenrahmen (2) mindestens zwei spiegelsymmetrisch zur Fahrzeuglängsebene angeordnete Lagerbuchsen (10, 10') aufweist.

5. Radachse nach mindestens einem der Ansprüche 1 bis 4,
**dadurch gekennzeichnet, daß**
die Achse weitere Querlenker, die jeweils gelenkig mit einem Radträger (6) und dem Zwischenrahmen (2) gekoppelt sind oder Längslenker, die jeweils gelenkig mit einem Radträger (6) und dem Zwischenrahmen (2) oder der Karosserie (11) gekoppelt sind, besitzt.

6. Radachse nach mindestens einem der Ansprüche 1 bis 5,
**dadurch gekennzeichnet, daß**
die Lagerbuchse (10, 10') Hohlräume und/oder eingebettete Fremdmassen enthält, um eine richtungsabhängige Steifigkeit zu erzielen.

7. Radachse nach mindestens einem der Ansprüche 1 bis 6,
**dadurch gekennzeichnet, daß**
das Grundmaterial der Lagerbuchse (10, 10') Gummi ist.

## Claims

1. Wheel axle for a motor vehicle, containing
a) an intermediate frame (2) which has bearing bushings (10, 10') for connecting to the bodywork (11) of the motor vehicle;
b) an individual wheel suspension composed of a lower transverse link (4) and an upper transverse link (8) for each wheel, the transverse links (4, 8) being each coupled to a wheel carrier (6) and the intermediate frame (2) in an articulated fashion,
**characterized in that**, in the mounted state with an angle of inclination (β) of 5° to 45° with respect to the transverse axis of the vehicle, the bearing bushings (10, 10') have a lower degree of rigidity than in all the other directions.

2. Wheel axle according to Claim 1, **characterized in that** the lower transverse link (4) is longer than the upper transverse link (8).

3. Wheel axle according to Claims 1 or 2, **characterized in that** the rigidity of the bearing bushings (10, 10') is set such that a change in the wheel camber during a parallel wheel movement is minimized and rolling of the bodywork during an opposing wheel movement is compensated.

4. Wheel axle according to at least one of Claims 1 to 3, **characterized in that** the intermediate frame (2) has at least two bearing bushings (10, 10') which are arranged in a mirror-inverted fashion with respect to the longitudinal plane of the vehicle.

5. Wheel axle according to at least one of Claims 1 to 4, **characterized in that** the axle has further transverse links which are each coupled to a wheel carrier (6) and the intermediate frame (2) in an articulated fashion, or longitudinal links which are each coupled to a wheel carrier (6) and the intermediate frame (2) or to the bodywork (11) in an articulated fashion.

6. Wheel axle according to at least one of Claims 1 to 5, **characterized in that** the bearing bushing (10, 10') contains cavities and/or embedded foreign masses in order to bring about direction-dependent rigidity.

7. Wheel axle according to at least one of Claims 1 to 6, **characterized in that** the basic material of the bearing bushing (10, 10') is rubber.

## Revendications

1. Essieu de roue pour un véhicule automobile, comprenant:
a) un cadre intermédiaire (2), qui présente des douilles-palier (10, 10') pour la connexion à la carrosserie (11) du véhicule automobile ;
b) pour chaque roue, une suspension de roue individuelle constituée d'un bras oscillant transversal inférieur (4) et d'un bras oscillant transversal supérieur (8), les bras oscillants transversaux (4, 8) étant à chaque fois accouplés de manière articulée à un support de roue (6) et au cadre intermédiaire (2) ;
**caractérisé en ce que**
les douilles-palier (10, 10'), dans l'état monté suivant un angle d'inclinaison (β) de 5° à 45° par rapport à l'axe transversal du véhicule, présentent une plus faible rigidité que dans toutes les autres directions.

2. Essieu de roue selon la revendication 1,
**caractérisé en ce que**
le bras oscillant transversal inférieur (4) est plus long que le bras oscillant transversal supérieur (8).

3. Essieu de roue selon la revendication 1 ou 2,
**caractérisé en ce que**
la rigidité des douilles-palier (10, 10') est ajustée de telle sorte qu'une variation du carrossage de la roue pendant un mouvement parallèle de la roue soit minimisée et qu'un roulement de la carrosserie pendant un mouvement contraire de la roue soit compensé.

4. Essieu de roue selon au moins l'une quelconque des revendications 1 à 3,
**caractérisé en ce que**
le cadre intermédiaire (2) présente au moins deux douilles-palier (10, 10') disposées de manière symétrique en miroir par rapport au plan longitudinal du véhicule.

5. Essieu de roue selon au moins l'une quelconque des revendications 1 à 4,
**caractérisé en ce que**
l'essieu possède d'autres bras oscillants transversaux qui sont à chaque fois accouplés de manière articulée à un support de roue (6) et au cadre intermédiaire (2), ou des bras oscillants longitudinaux, qui sont à chaque fois accouplés de manière articulée à un support de roue (6) et au cadre intermédiaire (2) ou à la carrosserie (11).

6. Essieu de roue selon au moins l'une quelconque des revendications 1 à 5,
**caractérisé en ce que**
la douille-palier (10, 10') contient des cavités et/ou des masses étrangères encastrées, afin d'obtenir une rigidité dépendant de la direction.

7. Essieu de roue selon au moins l'une quelconque des revendications 1 à 6,
**caractérisé en ce que**
le matériau de base de la douille-palier (10, 10') est du caoutchouc.
